# EUROPEAN PATENT APPLICATION

(11) **EP 3 403 929 A1**
(43) Date of publication of application: **21.11.2018**
(21) Application number: 18166751.0
(22) Date of filing: 11.04.2018
(51) Int. Cl.: B64C 39/02, G05D 1/00, G08B 1/00

(54) **SYSTEMS AND METHODS FOR OUTDOOR EVACUATION GUIDANCE USING AN UAV**

(30) Priority: 16.05.2017 US 201715596783
(71) Applicant: Honeywell International Inc., Morris Plains, NJ New Jersey 07950 (US)
(72) Inventor: SETHI, Aatish, Morris Plains, NJ 07950 (US); NALUKURTHY, RajeshBabu, Morris Plains, NJ 07950 (US); MATHURAJU, SivaSankar, Morris Plains, NJ 07950 (US); AGWAN, Jayesh, Morris Plains, NJ 07950 (US)
(74) Representative: Houghton, Mark Phillip

(57) **Abstract**

Systems and methods for outdoor evacuation guidance using an UAV are provided. Some methods can include a UAV receiving a signal from a central station device, and responsive to the signal, the UAV flying over an outdoor environment while emitting one or more messages to direct humans within the outdoor environment to evacuate the outdoor environment.

## Description

### FIELD

The present invention relates to systems and methods for outdoor evacuation guidance. More particularly, the present invention relates to systems and methods for outdoor evacuation guidance using an UAV.

### BACKGROUND

When an emergency situation occurs, it is very important to save human lives, for example, by safely and quickly evacuating a region in which the emergency situation exists. However, when the region includes an outdoor environment, various problems can arise.

For example, an outdoor environment from which humans need to be evacuated can include a number of roads and crossroads, but the number of human guides deployed to assist with evacuation can be far less than the number of roads and crosswords, and it takes time for human guides to reach appropriate areas to assist with evacuation. Similarly, the number of humans or the size of a crowd that needs to be evacuated from the outdoor environment may be much larger than the number of human guides deployed to assist with evacuation, and each of the human guides can only assist those in the vicinity of or who pass by the guides. Indeed, a human guide may not be able to see a person moving in the wrong direction or a person stuck or trapped in the outdoor environment. Furthermore, in some situations, such as a panic situation or a large crowd, it may be difficult for a person to locate a human guide in an outdoor environment or to follow the evacuation instructions of a human guide. Further still, while each human guide can observe local information and can access information from other guides or observers, the human guides do not have a complete set of information related to the outdoor environment.

In view of the above, there is a continuing, ongoing need for improved systems and methods.

### BRIEF DESCRIPTION OF THE DRAWINGS

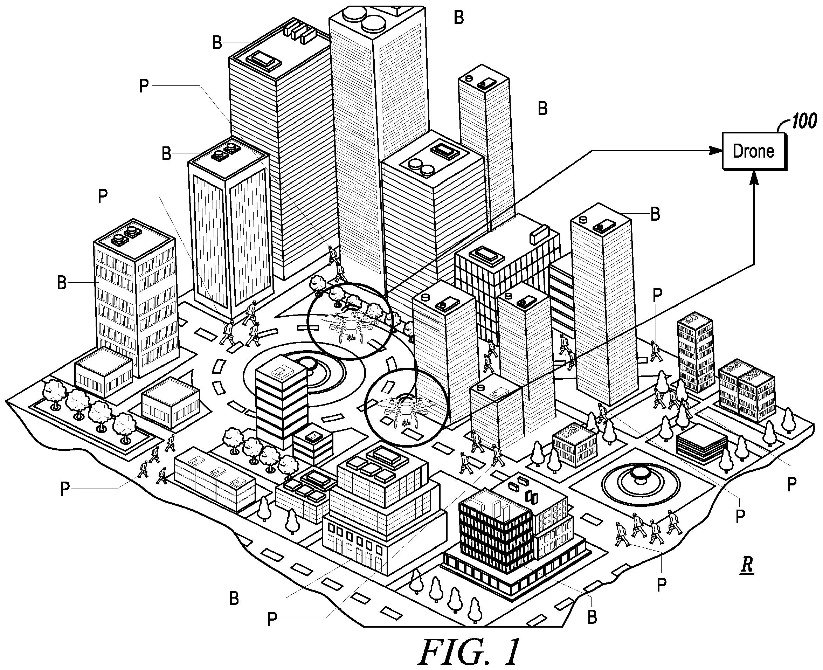

FIG. 1 is a perspective view of an outdoor environment in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for outdoor evacuation guidance using an unmanned aerial vehicle (UAV), such as a drone. For example, an UAV in accordance with disclosed embodiments can be used for monitoring and surveilling an outdoor environment and for guiding and rescuing humans being evacuated from the outdoor environment.

In accordance with disclosed embodiments, a docking base station can be located in or near an outdoor environment, and a plurality of UAVs can be located at the docking base station when no emergency condition exists in the outdoor environment for, for example, charging the plurality of UAVs.

Each of the plurality of UAVs can communicate with a central station device of a system installed in the outdoor environment or in buildings located throughout the outdoor environment, for example, a building management system, a fire alarm system, or a connected home system with internet of things (loT) devices. In some embodiments, each of the plurality of UAVs can communicate with the central station device via a cloud network.

When the installed system detects an emergency condition in the outdoor environment or in one of the buildings located throughout the outdoor environment, the central station device of the installed system can transmit an activation signal to one or more of the plurality of UAVs, and the activation signal can include initial data related to route maps and incident locations within the outdoor environment. Furthermore, the central station device can periodically transmit an update signal to the one or more of the plurality of UAVs, and the update signal can include updated data related to the route maps and the incident locations, thereby ensuring that the one or more of the plurality of UAVs use real time information when evacuating people from the outdoor environment.

Responsive to receiving the activation signal or to a manual activation, the one or more of the plurality of UAVs can depart the docking base station and quickly fly over and throughout the outdoor environment in a plurality of different directions, for example, over routes that people in the outdoor environment can traverse. Advantageously, each of the plurality of UAVs can be highly navigable. Furthermore, because the one or more of the plurality of UAVs is mobile and can fly over people in the outdoor environment, the perceptibility of the UAVs to the people in the outdoor environment can be greater than human guides or fixed signs located throughout the outdoor environment. Further still, deployment of the one or more of the plurality of UAVs can be highly coordinated, and the UAVs can reach their intended destinations faster than human guides could reach the same destinations.

In some embodiments, the one or more of the plurality of UAVs can include a static or dynamic user interface device, for example, a visual output device, that can display one or more directional sign that people in the outdoor environment can follow to evacuate from the outdoor environment. Additionally or alternatively, in some embodiments, the one or more of the plurality of UAVs can include an audio output device that can broadcast a prerecorded evacuation message or a live evacuation message received from the central station device, thereby acting as a mass notification system for directing a crowd or a portion of the crowd. Additionally or alternatively, in some embodiments, the one or more of the plurality of UAVs can include one or more laser that can move so as to illuminate an evacuation route and guide people in the outdoor environment along the evacuation route. Additionally or alternatively, in some embodiments, the one or more of the plurality of UAVs can include an illumination device that can be used to light the outdoor environment or portions thereof during a blackout condition.

Additionally or alternatively, in some embodiments, the one or more of the plurality of UAVs can include a camera or other image capturing device that can capture real time images of the outdoor environment, which can be transmitted to the central station device so a user thereat can view the outdoor environment and initiate physical human interaction therein, when necessary. Additionally or alternatively, in some embodiments, the camera can monitor trapped or stuck people in the outdoor environment and assist first responders in rescuing such people, for example, by providing real time images of such people to the first responders or by flying over such people so as to alert the first responders of the location of such people. Additionally or alternatively, in some embodiments, the one or more of the plurality of UAVs can carry emergency medical supplies that can be retrieved therefrom by people or first responders in the outdoor environment when needed.

In some embodiments, the central station device can use the initial and updated data related to route maps and the incident locations within the outdoor environment to generate and update an evacuation plan from the outdoor environment as conditions develop. In these embodiments, the central station device can transmit an evacuation signal to the one or more of the plurality of UAVs with instructions for executing the evacuation plan. Additionally or alternatively, in some embodiments, each of the one or more of the plurality of UAVs can use the initial and updated data related to route maps and the incident locations within the outdoor environment to generate, update, and execute an evacuation plan from the outdoor environment as conditions develop. Additionally or alternatively, in some embodiments, each of the one or more of the plurality of UAVs can communicate and coordinate with each other to generate, update, and execute an evacuation plan from the outdoor environment as conditions develop. For example, the evacuation plan can include the directional signs displayed by the one or more of the plurality of UAVs or the audio messages, lasers, or light emitted by the one or more of the plurality of UAVs.

FIG. 1 is a perspective view of an outdoor environment R in accordance with disclosed embodiments. As seen in FIG. 1, the outdoor environment R can include a plurality of buildings B therein and a plurality of people P moving along routes throughout the outdoor environment. When a need for evacuation from the outdoor environment R arises, a plurality of UAVs (drones) 100 can be deployed to fly over the people R throughout the outdoor environment R to collect real time images of the outdoor environment R or to guide the people P out of the outdoor environment R, for example, by visually displaying directional signs, emitting audible messages, directing lasers into the outdoor environment, or illuminating the outdoor environment. Each of the plurality of UAVs 100 can communicate with a central station device of a system installed in the outdoor environment R or in one of the buildings B to exchange information therewith as disclosed and described herein.

It is to be understood that each of the plurality of UAVs and the central station device as disclosed and described herein can include a transceiver device, a memory device, and a user interface device, and each of the transceiver device, the memory device, and the user interface device can be in communication with respective control circuitry, one or more programmable processors, and executable control software as would be understood by one of ordinary skill in the art. The executable control software can be stored on a transitory or non-transitory computer readable medium, including but not limited to local computer memory, RAM, optical storage media, magnetic storage media, flash memory, and the like. In some embodiments, some or all of the control circuitry, the programmable processors, and the control software can execute and control at least some of the methods described herein.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

Preferred Embodiments of the Present Invention are as numbered below:
1. A method comprising:
   a first unmanned aerial vehicle (UAV) receiving a signal from a central station device; and
   responsive to the signal, the first UAV flying over an outdoor environment while emitting one or more messages to direct humans within the outdoor environment to evacuate the outdoor environment.
2. The method of 1 further comprising the first UAV charging at a docking base station prior to receiving the signal.
3. The method of 1 wherein the central station device is part of a connected home system with loT devices.
4. The method of 1 wherein the signal includes real time data related to route maps and incident locations within the outdoor environment.
5. The method of 4 further comprising periodically receiving the signal from the central station device.
6. The method of 4 further comprising the first UAV using the real time data to generate, update, and execute an evacuation plan to evacuate the humans from the outdoor environment.
7. The method of 6 further comprising the first UAV communicating with a second UAV to generate, update, and execute the evacuation plan.
8. The method of 1 further comprising visually displaying the one or more messages or audibly emitting the one or more messages.
9. The method of 1 further comprising:
   a camera of the first UAV capturing real time images of the outdoor environment; and
   the first UAV transmitting the real time images to the central station device.
10. The method of 1 wherein the signal includes instructions for executing an evacuation plan generated by the central station device to evacuate the humans from the outdoor environment.
11. A system comprising:
   a first unmanned aerial vehicle (UAV);
   a programmable processor carried by the first UAV;
   executable control software stored on a non-transitory computer readable medium carried by the first UAV;
   a transceiver device carried by the first UAV; and
   a user interface device carried by the first UAV,
   wherein the transceiver device receives a signal from a central station device,
   wherein, responsive to the signal, the programmable processor and the executable control software direct the first UAV to fly over an outdoor environment while causing the user interface device to emit one or more messages to direct humans within the outdoor environment to evacuate the outdoor environment.
12. The system of 11 wherein the first UAV charges at a docking base station prior to receiving the signal.
13. The system of 11 wherein the central station device is part of a connected home system with IoT devices.
14. The system of 11 wherein the signal includes real time data related to route maps and incident locations within the outdoor environment.
15. The system of 14 wherein the transceiver device periodically receives the signal from the central station device.
16. The system of wherein the programmable processor and the executable control software use the real time data to generate, update, and execute an evacuation plan to evacuate the humans from the outdoor environment.
17. The system of 16 wherein the transceiver device communicates with a second UAV to generate, update, and execute the evacuation plan.
18. The system of 11 wherein the user interface device visually displays the one or more messages or audibly emits the one or more messages.
19. The system of 11 further comprising:
   a camera carried by the first UAV,
   wherein the camera captures real time images of the outdoor environment, and
   wherein the transceiver device transmits the real time images to the central station device.
20. The system of 1 wherein the signal includes instructions for executing an evacuation plan generated by the central station device to evacuate the humans from the outdoor environment.

## Claims

1. A method comprising:
a first unmanned aerial vehicle (UAV) receiving a signal from a central station device; and
responsive to the signal, the first UAV flying over an outdoor environment while emitting one or more messages to direct humans within the outdoor environment to evacuate the outdoor environment.

2. The method of claim 1 further comprising the first UAV charging at a docking base station prior to receiving the signal.

3. The method of claim 1 wherein the central station device is part of a connected home system with loT devices.

4. The method of claim 1 wherein the signal includes real time data related to route maps and incident locations within the outdoor environment.

5. The method of claim 4 further comprising periodically receiving the signal from the central station device.

6. The method of claim 4 further comprising the first UAV using the real time data to generate, update, and execute an evacuation plan to evacuate the humans from the outdoor environment.

7. The method of claim 6 further comprising the first UAV communicating with a second UAV to generate, update, and execute the evacuation plan.

8. The method of claim 1 further comprising visually displaying the one or more messages or audibly emitting the one or more messages.

9. The method of claim 1 further comprising:
a camera of the first UAV capturing real time images of the outdoor environment; and
the first UAV transmitting the real time images to the central station device.

10. The method of claim 1 wherein the signal includes instructions for executing an evacuation plan generated by the central station device to evacuate the humans from the outdoor environment.

11. A system comprising:
a first unmanned aerial vehicle (UAV);
a programmable processor carried by the first UAV;
executable control software stored on a non-transitory computer readable medium carried by the first UAV;
a transceiver device carried by the first UAV; and
a user interface device carried by the first UAV,
wherein the transceiver device receives a signal from a central station device,
wherein, responsive to the signal, the programmable processor and the executable control software direct the first UAV to fly over an outdoor environment while causing the user interface device to emit one or more messages to direct humans within the outdoor environment to evacuate the outdoor environment.

12. The system of claim 11 wherein the first UAV charges at a docking base station prior to receiving the signal.

13. The system of claim 11 wherein the central station device is part of a connected home system with IoT devices.

14. The system of claim 11 wherein the signal includes real time data related to route maps and incident locations within the outdoor environment.

15. The system of claim 14 wherein the transceiver device periodically receives the signal from the central station device.
